# EUROPÄISCHE PATENTANMELDUNG

(11) **EP 2 752 941 A1**
(43) Veröffentlichungstag der Anmeldung: **09.07.2014**
(21) Anmeldenummer: 13150192.6
(22) Anmeldetag: 03.01.2013
(51) Int. Cl.: H01Q 1/42, H01Q 19/19, H01Q 1/22

(54) **Parabolantenne mit einem im Radom integrierten Subreflektor**

(71) Anmelder: VEGA Grieshaber KG, 77709 Wolfach (DE)
(72) Erfinder: Kienzle, Klaus, 77736 Zell a. H. (DE)
(74) Vertreter: Patentanwälte Westphal, Mussgnug & Partner

(57) **Zusammenfassung**

Sensor für ein Füllstandmessgerät (1) zur Bestimmung des Füllstands in einem Behälter mittels Laufzeitbestimmung von Hochfrequenzsignalen, aufweisend einen Hauptreflektor (7), mit einem Randbereich (12) und einem Innenbereich (10), einen Subreflektor(17), der mit dem Randbereich des Hauptreflektors über ein Radom (20) verbunden ist, einen Innenraum (30), der von dem Radom (20), und dem Hauptreflektor (7) umschlossen ist, und einen mit dem Hauptreflektor verbundenen Hohlleiter (3), mit einem vorderen Ende (4), das zur Ein- und/oder Auskopplung elektromagnetischer Wellen auf den Subreflektor (17) gerichtet ist, wobei das Radom und der Subreflektor einstückig ausgebildet sind.

## Beschreibung

Die vorliegende Erfindung betrifft einen Sensor zur Messung des Füllstands in einem Behälter, gemäß dem Oberbegriff des Patentanspruchs 1.

Aus dem Stand der Technik sind Sensoren zur Messung des Füllstands in einem Behälter, der mit einer Flüssigkeit oder mit Schüttgut aufgefüllt ist, mittels der Laufzeitbestimmung von Hochfrequenzsignalen bekannt, wobei der Sensor als Parabolantenne ausgebildet ist, welche einen Hauptreflektor, einen Subreflektor, und einen mit dem Hauptreflektor verbundenen Hohlleiter aufweist, der mit seinem vorderen Ende zur Ein- und/oder Auskopplung elektromagnetischer Wellen auf den Subreflektor gerichtet ist.

Als Sensor ausgebildete Parabolantennen können daher zur Messung des Füllstands von Flüssigkeiten oder zur Messung des Füllstands von Schüttgütern oder zur Bestimmung des Grenzstands von Flüssigkeiten oder Schüttgütern verwendet werden. Derartige Sensoren müssen oftmals hohe Drücke oder hohe Temperaturen aushalten und kommen häufig in Umgebungen mit aggressiven Medien zum Einsatz. Um ihre Bestandteile vor Korrosion und Zerstörung zu schützen, werden die Sensoren daher meist mit einer Schutzhülle oder einem Radom versehen.

Bei der Messung von Füllständen mittels Laufzeitbestimmung von Hochfrequenzsignalen werden Hochfrequenzimpulse über eine Antenne ausgesendet und an einer Mediumsoberfläche reflektiert. Die reflektierten Hochfrequenzimpulse werden vom Sensor wieder empfangen. Aus dem Zeitunterschied zwischen dem Aussenden des Hochfrequenzimpulses und dem Empfangen des reflektierten Hochfrequenzimpulses kann der Abstand des Sensors zur Oberfläche des jeweiligen Mediums ermittelt werden. Als Parabolantenne ausgebildete Füllstandmessgeräte zur Überwachung und Bestimmung von Füllständen in einem Behälter sind im Stand der Technik bekannt.

Die DE 10 2009 000 733 beispielsweise offenbart ein Füllstandmessgerät, das eine spezielle Temperatur und eine druckstabile hermetische Abdichtung besitzt. Hierzu wird eine Prozesstrenneinheit vorgeschlagen, die zumindest mit einer für Hochfrequenzsignale durchlässigen Abstrahlstruktur, einem Haltebügel und einer Überwurfhülse ausgestaltet ist, wobei die Abstrahlstruktur den Hohlleiter in einem vorgegebenen Bereich auf der Außenseite des Hohlleiters bündig umschließt, und wobei eine radiale Umschließung des den Hohlleiter umgebenden Bereichs der Abstrahlstruktur durch eine montierte Überwurfhülse ausgestaltet ist. Die Abstrahlstruktur ist dabei formschlüssig und dichtend an die Außenseite des Hohlleiters angepresst, der metallische Haltebügel ist vorzugsweise mit dem metallischen Subreflektor und mit der montierten metallischen Überwurfhülse verbunden. Die aus dem Hohlleiter austretende elektromagnetische Welle wird jedoch von diesem Haltebügel teilweise reflektiert und abgelenkt, so dass das austretende elektromagnetische Strahlungsfeld gestört ist. Solche Störreflektionen führen jedoch bei der Messung zu einer teilweise erheblichen und störenden Reduzierung des Signal/Rauschverhältnisses, was dazu führen kann, dass das Echo im Rauschen verschwindet, wodurch keine Messung des Füllstands mehr möglich ist.

Die DE 10 2005 049 242 versucht dieses Problem durch die Verwendung einer Streuscheibe zum seitlichen Abführen des störenden Anteils der elektromagnetischen Wellen vorbei an dem Erreger zu lösen. Dabei werden die vom Erreger ausgesendeten elektromagnetischen Wellen nur teilweise vom Parabolspiegel gebündelt und zum Füllgut abgestrahlt. Der andere Teil der vom Erreger ausgesendeten elektromagnetischen Wellen wird nicht gebündelt sondern von der Streuscheibe seitlich weggeführt. Auf diese Weise kann das Signal-Rauschverhältnis vor allem im Nahbereich verbessert werden und die Qualität und Sensitivität der Messung können ansteigen. Die Streuscheibe ist dabei im Zentrum des Parabolspiegels angeordnet. Der Erreger ist in den Ausführungsbeispielen der DE 10 2005 049 242 direkt an den Hohlleiter gekoppelt und mit diesem fest verbunden und optional mit einem Radom geschützt. Diese Vorrichtung hat jedoch den Nachteil, dass einerseits nur ein Teil der elektromagnetischen Strahlung zur Messung der Füllhöhe zur Verfügung steht, andererseits durch die Halterung des Erregers mit dem Hohlleiter weitere Störungen des elektromagnetischen Feldes auftreten können.

Aufgabe der vorliegenden Erfindung ist es daher, einen Sensor für ein Füllstandmessgerät bereit zu stellen, der keine das Antennenfeld des Sensors störenden Elemente aufweist und der andererseits einfach zu handhaben ist.

Diese Aufgabe wird gelöst durch eine Vorrichtung nach Anspruch 1. Vorteilhafte Ausführungen sind in den Unteransprüchen dargestellt.

Erfindungsgemäß weist der Sensor für ein Füllstandmessgerät zur Bestimmung des Füllstands in einem Behälter mit Laufzeitbestimmung von Hochfrequenzsignalen einen Hauptreflektor mit einem Randbereich und einem Innenbereich auf, einen Subreflektor, der mit dem Randbereich des Hauptreflektors über ein Radom verbunden ist, einen Innenraum, der von dem Radom und dem Hauptreflektor umschlossen ist, sowie einen mit dem Hauptreflektor verbundenen Hohlleiter, mit einem vorderen Ende, das zur Ein- und/oder Auskopplung elektromagnetischer Wellen auf den Subreflektor gerichtet ist. Das Radom kann durch Kleben oder Schrauben mit dem Subreflektor verbunden sein. Vorzugsweise ist es jedoch mit dem Subreflektor einstückig ausgebildet.

Auf diese Weise kann auf die bisher übliche Befestigung des Subreflektors verzichtet werden. Somit vergrößert sich die wirksame Antennenfläche, und der Wirkungsgrad der abgestrahlten Leistung erhöht sich, da das Antennenfeld des Detektors nicht mehr durch hervorstehende Stege gestört werden kann. Dieser Vorteil wirkt sich speziell bei höheren Frequenzen beispielsweise im Bereich zwischen 77 und 81 GHz aus, in einem Bereich also, in dem die Haltestege oder sonstige Befestigungen im Verhältnis zur Wellenlänge bereits recht groß werden.

Der Subreflektor und das Radom sind vorzugsweise aus einem ersten dielektrischen Material geformt, wobei der Teil des dielektrischen Materials, der den Subreflektor formt, an seiner dem Innenraum zugewandten Seite eine reflektierende Beschichtung, vorzugsweise eine Metallbeschichtung, aufweist. Dies ermöglicht eine einfache Herstellung des Radoms zusammen mit dem Subreflektor und einen modularen Aufbau des Sensors. Der Innenraum des Sensors ist vorzugsweise druckfest und/oder vakuumfest gegenüber einen den Sensor umgebenden Außenraum abgedichtet, damit korrosive Dämpfe von Flüssigkeiten, deren Füllstand bestimmt werden soll, nicht den Sensor beschädigen können, oder Schüttgut nicht den Sensor verschmutzen kann.

Der Randbereich des Hauptreflektors kann als ein den Innenbereich umlaufender Kragen ausgebildet sein, welcher vorzugsweise als ein in Abstrahlrichtung vorstehender rohrförmiger, den Innenbereich umgebendender Kragen ausgebildet ist. Dadurch kann die Abstrahlrichtung des Sensors verbessert werden. Das Radom kann ebenfalls einen Kragen aufweisen, der so ausgebildet ist, dass das Radom auf den Kragen des Hauptreflektors aufgeschraubt, eingeschraubt, oder formschlüssig aufgesteckt werden kann. Der Kragen des Hauptreflektors kann dabei ein entsprechendes Gewinde aufweisen, auf welches das Radom aufgeschraubt, oder in welches das Radom eingeschraubt werden kann. Dadurch kann ein sicherer Halt des Radoms auf dem Hauptreflektor gewährleistet werden.

Um die Abdichtung des Innenraums gegenüber dem Außenraum zu bewerkstelligen, kann der Randbereich des Hauptreflektors eine Dichtfläche zur Bereitstellung einer dichtenden Verbindung zwischen dem Radom und dem Hauptreflektor aufweisen. Dazu kann zwischen dem Randbereich des Hauptreflektors und dem Radom wenigstens ein O-Ring zur Abdichtung des Innenraums gegenüber dem Außenraum vorgesehen sein.

Der Hauptreflektor des Sensors kann parabelförmig oder paraboloidförmig ausgebildet sein, und er kann entweder aus einem Metall bestehen, oder eine Metallbeschichtung auf dem Innenbereich seiner dem Innenraum zugewandten Seite aufweisen. Dadurch kann eine gute Wirkung der abgestrahlten Leistung erreicht werden. Der Subreflektor kann elliptisch oder hyperbolisch geformt sein. Er leitet die vom Hohlleiter abgestrahlte Leistung auf den Hauptreflektor und sorgt so für die gewünschte Abstrahlung. Vorteilhafterweise ist der Sensor dabei entweder als Cassegrain-Antenne oder als Gregory-Antenne ausgebildet. Der Subreflektor kann gemäß dem Gregory-Prinzip konkav gekrümmt ausgebildet sein oder er kann gemäß dem Cassegrain-Prinzip konvex gekrümmt ausgebildet sein.

Um die mechanische Stabilität zu erhöhen, ist das Radom vorteilhafterweise konvex und/oder kegelförmig ausgebildet. Das Radom kann beispielsweise aus einem Kunststoff bestehen. Es besteht vorteilhafterweise aus Polypropylen (PP) oder aus Polytetrafluorethylen (PTFE). Diese Materialien zeichnen sich durch eine für den Bereich des W-Bands geeignete Dielektrizitätskonstante aus und absorbieren die ausgesendete Strahlung nur schwach. Die Materialien sind andererseits aber bezüglich Temperaturfestigkeit und Ausdehnung nicht ganz optimal und können im Füllstandbereich daher nur bedingt eingesetzt werden, beispielsweise bei drucklosen oder Niederdruck-Anwendungen und/oder bei nicht allzu hohen Temperaturen. In Umgebungen in denen der Sensor hohen Drucken ausgesetzt ist, oder in Umgebungen in denen er eine besonders hohen Festigkeit aufweisen muss, wird das Radom vorteilhafterweise aus einem glasfaserverstärkten Kunststoff oder aus einem Hochleistungskunststoff gebildet. Als Kunststoffmaterialien in diesen Fällen eignen sich besonders Materialien wie Polyetheretherketon (PEEK) oder Polyetherimide (PEI).

In einer vorteilhaften Ausgestaltung weist das Radom eine Dicke auf, die dem ganzzahligen Vielfachen seiner halben dielektrischen Wellenlänge einer eingekoppelten elektromagnetischen Welle entspricht, wobei die Wellenlänge vorzugsweise einer Wellenlänge des W-Bandes, besonders vorzugsweise einer Wellenlänge zwischen 77 GHz und 81 GHz entspricht. Dadurch werden störende Rückreflektionen an den Oberflächen des Radoms vermieden.

Das vordere Ende des Hohlleiters kann hornförmig ausgebildet sein und es kann vorzugsweise mit einem zweiten festen dielektrischem Material gefüllt sein. Auf diese Weise kann der Wellenwiderstand des Hohlleiters an den Wellenwiderstand des freien Raumes angepasst werden.

Der Innenraum kann mit einem dritten, vorzugsweise festen dielektrischen Material gefüllt sein. Dadurch wird der Sensor druckstabil und der Durchmesser des Hohlleiters kann geringer gewählt werden. Die Dielektrizitätskonstanten des ersten, zweiten und dritten Materials müssen nicht notwendigerweise gleich sein, sie können es jedoch.

Das vordere Ende des Hohlleiters kann natürlich auch als ein in den Innenraum hineinragender, in Richtung Subreflektor geöffneter Hohlleiter ausgebildet sein, wenn beispielsweise die gesamte Abstrahlungsenergie über den Subreflektor effektiv auf den Hauptreflektor gelenkt werden soll.

Der Sensor kann in einem Füllstandmessgerät zur Bestimmung des Füllstands in einem Behälter mittels Laufzeitbestimmung von Hochfrequenzsignalen zum Abstrahlen und Empfangen elektromagnetischer Strahlung verwendet werden.

Die in der nachfolgenden Beschreibung verwendeten Bezeichnungen wie oben, unten, links und rechts und ähnliches, beziehen sich auf die Figuren und sollen in keiner Weise einschränkend sein, auch dann nicht, wenn sie sich auf bevorzugte Ausführungsformen beziehen. Der Begriff "leckdicht" soll bedeuten, dass bei einem Druckunterschied von wenigstens 100 mbar kein Leck auftritt. Der Begriff "vakuumfest" soll bedeuten, dass bei einem Druckunterschied von bis zu einem Bar kein Leck auftritt. Der Begriff "druckfest" ist so zu verstehen, dass der Sensor bei einem Außendruck von wenigstens 3 bar eingesetzt werden kann, und dass die Durchbiegung des Radoms bei Raumtemperatur dabei kleiner als 0,3 mm ist. Vorzugsweise kann ein druckfester Sensor jedoch bei einem Außendruck von wenigstens 10 bar eingesetzt werden.

Die Erfindung wird nachfolgend anhand der Zeichnungen näher beschrieben. In den Zeichnungen zeigen:
- Figur 1: die Seitenansicht des Sensors in einer ersten Ausführungsform mit flachem Radom und hornförmig erweitertem Hohlleiterendstück,
- Figur 2: eine alternative Ausführungsform des Sensors mit kegelförmigem Radom,
- Figur 3: eine dritte Ausführungsform des Sensors mit nach vorne gezogenem Kragenteil,
- Figur 4: eine weitere Ausführungsform des Sensors mit einem in den Innenraum hineinragenden Hohlleiter,
- Figur 5: die Seitenansicht eines vakuumdichten Sensors mit einer radial zwischen Radom und Randbereich des Hauptreflektors angeordneten O-Ring-Dichtung, und
- Figur 6: eine druckdichte Ausführungsform des Sensors mit einer axialen und mit einer radialen zwischen Radom und dem Randbereich des Hauptreflektors angeordneten O-Ring-Dichtung.

In der folgenden Figurenbeschreibung werden für die gleichen oder ähnliche Elemente die gleichen Bezugszeichen verwendet.

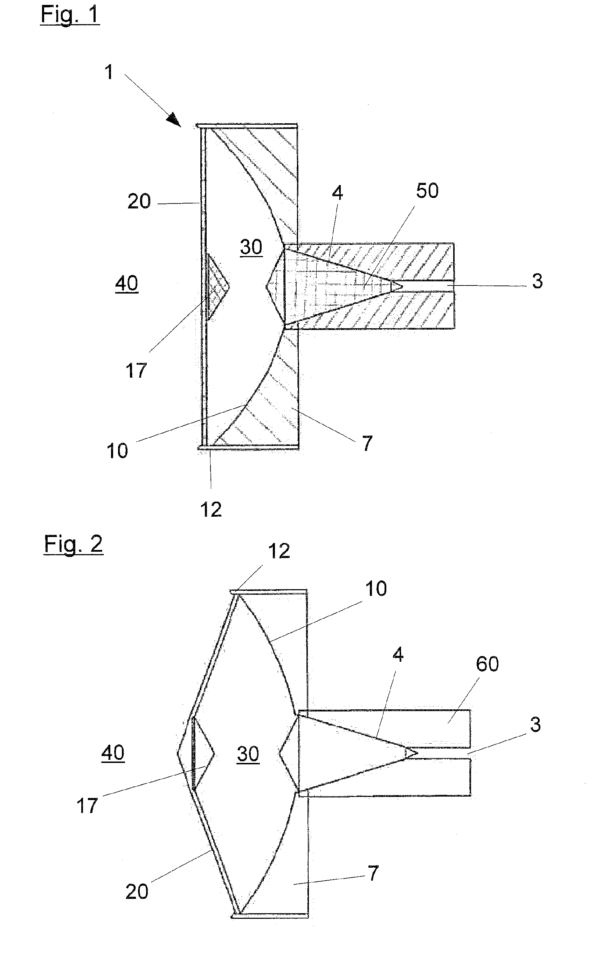

Figur 1 zeigt eine schematische Schnittdarstellung eines Sensors 1 mit einem Hohlleiter 3 dessen vorderes Ende 4 hornförmig erweitert, und mit einem Dielektrikum ausgefüllt ist. Das vordere Ende 4 des Hohlleiters 3 ist mit einem Hauptreflektor 7 verbunden. Ein die vordere Oberfläche des Hauptreflektors 7 bildender Innenbereich 10 wird von einem Randbereich 12 des Hauptreflektors begrenzt. Der Innenbereich 10 weist eine für elektromagnetische Strahlung reflektierende, vorzugsweise metallische Oberfläche auf. Ein dem vorderen Ende 4 des Hohlleiters gegenüberliegender Subreflektor 17 ist mit dem Randbereich 12 des Hauptreflektors 7 über ein Radom 20 aus dielektrischem Material verbunden. Der Subreflektor 17 weist auf seiner dem Hohlleiterendstück 4 zugewandten Seite zumindest eine metallische Beschichtung auf, oder er besteht vollständig aus Metall. Das Radom 20 ist mit dem Subreflektor 17, diesen tragend, entweder über eine Schraub- oder Klebeverbindung verbunden, oder vorteilhafterweise einstückig mit ihm ausgebildet. Der Hauptreflektor 7 umschließt mit dem Radom 20 und dem Subreflektor 17 einen Innenraum 30, der gegen den den Sensor 1 umgebenden Außenraum 40 mittels zwischen Randbereich 12 und Radom 20 angeordneten O-Ringen 43, 46 hermetisch abgedichtet ist.

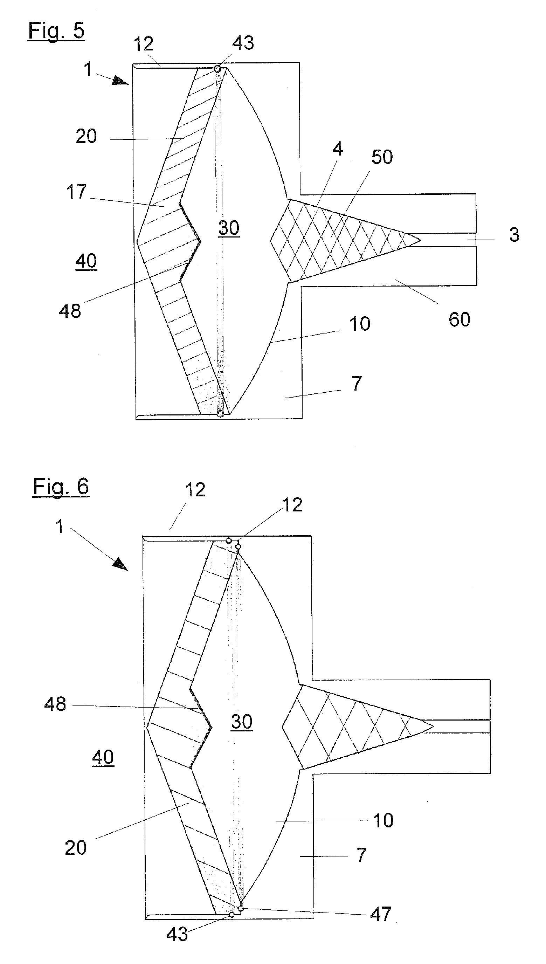

Eine solche Abdichtung kann, wie beispielsweise in Figur 5 dargestellt, durch einen radial zwischen Randbereich 12 und Radom 20 angeordneten O-Ring 43 erfolgen. Der Subreflektor 17 ist in Figur 5 einstückig mit dem Radom 20 ausgebildet und mit einer Metallbeschichtung 48 versehen. Das Radom 20 in Figur 5 besteht aus einem ersten dielektrischen Material. Das hornförmig erweiterte Hohlleiterendstück 4 ist, wie in Figur 1 mit einem zweiten dielektrischen Material 50 gefüllt.

Figur 6 zeigt eine weitere Möglichkeit der Abdichtung des Innenraums 30 gegenüber dem Außenraum 40. Bei diesem Beispiel ist der Randbereich des Hauptreflektors 12 L-förmig um seinen Innenbereich ausgebildet. Der direkt an den Innenbereich angrenzende Teil des Randbereichs 12 stellt eine weitere Dichtfläche für die Abdichtung des Innenraums 30 gegenüber dem Außenraum 40 bereit. Die Abdichtung erfolgt in Figur 6 durch einen radial das Radom 20 umlaufenden O-Ring 43, wie bereits in Figur 5 beschrieben, und durch einen axial zwischen Radom 20 und Randbereich 12 angeordneten, den Innenbereich 10 des Hauptreflektors 7 umlaufenden O-Ring 47. Selbstverständlich sind auch Dichtungsanordnungen denkbar, bei denen beispielsweise die Dichtung nur anhand eines axial angeordneten O-Rings 47 erfolgt.

Um das Radom 20 am Hauptreflektor 7 zu befestigen und um gleichzeitig den Innenraum 30 gegenüber dem Außenraum 40 abzudichten, kann das Radom beispielsweise mittels eines Schraubgewindes in einen gemäß Figur 6 ausgebildeten Hauptreflektor 7 eingeschraubt werden, wenn der als L-förmiger Kragen ausgebildete Randbereich 12 beispielsweise eine umlaufende Einstülpung an seinem vorderen Ende, oder ein entsprechendes Gegengewinde aufweist. Die Abdichtung kann in diesem Fall beispielsweise allein über den axial den Innenbereich 10 des Hauptreflektors 7 umlaufenden O-Ring 47 erfolgen. Der Rand des Radoms 20 muss dabei nur so geformt sein, dass das Radom im in den Hauptreflektor eingeschraubten Zustand flächig am O-Ring 47 anliegt.

In den Figuren 1, 2, 5 und 6 ist das vordere Ende 4 des Hohlleiters 3 jeweils hornförmig ausgebildet und mit einem festen Dielektrikum ausgefüllt, durch welches der Innenraum 30 auch gegen das Innere des Hohlleiters 3 abgedichtet werden kann.

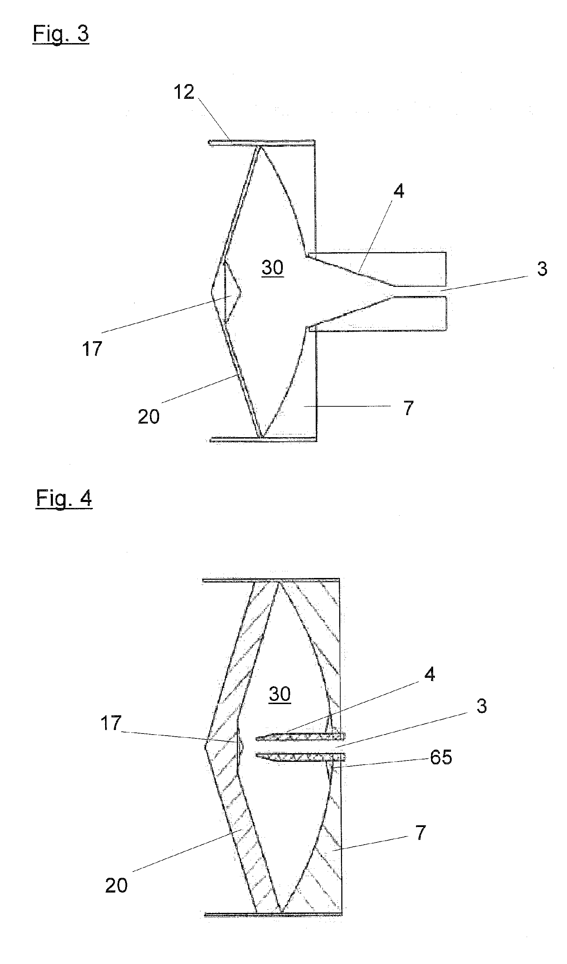

Figur 3 hingegen zeigt einen Sensor 1 mit einem hornförmig ausgebildeten Hohlleiterendstück 4, welches nicht mit einem festen Dielektrikum ausgefüllt ist. Bei diesem Beispiel erstreckt sich der Innenraum 30 auch in das Innere des Hohlleiters 3. Eine Abdichtung des Innenraums 30 gegen den Außenraum 40 kann, falls gewünscht, in diesen Fällen beispielsweise am signalgeberseitigen Anschlussstück des Hohlleiters 3 erfolgen.

Während bei Figur 1 das Radom eben, beziehungsweise flach ausgebildet ist, zeigen die Figuren 2 bis 6 ein konvex ausgebildetes Radom 20, welches beispielsweise kegelförmig geformt sein kann. Ein derartig ausgebildetes Radom 20 weist gegenüber der flachen Variante eine höhere mechanische Stabilität auf. Das vordere Ende 4 des Hohlleiters 3 in Figur 2 und 3 ist trichterförmig oder hornförmig so erweitert, dass der Wellenwiderstand des Hohlleiters an den Innenraum 30 angepasst ist. Der Innenraum 30 kann mit einem festen, einem flüssigen oder einem gasförmigen Dielektrikum gefüllt, oder leer sein. Die Wand 60 des Hohlleiters 3, 4 kann als Stütze beispielsweise aus Metall ausgebildet sein und den Reflektor 7 mit dem Subreflektor 17 und dem Radom 20 mechanisch abstützen. Sofern die Innenwand des Hohlleiters 3 metallisiert ist, kann die Wand 60 auch aus einem nichtmetallischen Material ausgebildet sein.

Figur 3 sowie 4 - 6 zeigen ein weiteres Ausführungsbeispiel eines Sensors für ein Füllstandmessgerät zur Bestimmung des Füllstands in einem Behälter. Bei diesem Beispiel ist der Randbereich 12 des Hauptreflektors rohrförmig um den Innenbereich 10 angeordnet. Eine solche Anordnung kann beispielsweise als zusätzlicher mechanischen Schutz für das Radom vorgesehen sein und den Sensor stabilisieren.

Der Randbereich 12 des Hauptreflektors 7 besteht vorzugsweise aus Metall, oder weist vorzugsweise eine metallische Beschichtung auf, damit die von der Flüssigkeitsoberfläche oder von der Oberfläche des Schüttguts reflektierte Strahlung, die schräg auf den Sensor auftreffen würde, nicht zurück in den Hohlleiter gelangen kann. Dadurch können Störungen in der Laufzeitbestimmung des Signals vermieden werden.

In Figur 4 ist das Endstück 4 des Hohlleiters 3 in den Innenraum 30 in Richtung auf den Subreflektor 17 hineingeführt. Das Endstück kann offen sein, oder mit einem Dielektrikum ausgefüllt sein. Eine Streuscheibe 65 sorgt dafür, dass die störenden Anteile der vom Subreflektor auf den Hauptreflektor reflektierten elektromagnetischen Wellen nicht mehr zurück auf den Subreflektor gelenkt werden, und so nicht in dem Hohlleiter zurückgekoppelt werden können. Das Radom 20 in Figur 6 weist eine Dicke auf, die dem ganzzahligen Vielfachen seiner halben dielektrischen Wellenlänge, beispielsweise dem 2 bis 10-fachen seiner halben dielektrischen Wellenlänge oder dem einfachen seiner halben dielektrischen Wellenlänge entspricht. Auf diese Weise wird der Anteil der Reflektion von der dem Innenraum 30 zugewandten Oberfläche des Radoms auf den Hohlleiter zurück minimiert. Die Verwendung eines dickeren Radoms, wie in den Figuren 4 bis 6 schematisch angedeutet, erhöht auch die Druckstabilität des Sensors insgesamt, so dass er auch in Umgebungen eingesetzt werden kann, in denen eine hohe mechanische Belastung des Sensors auftreten kann.

Die Messung des Füllstands mit einem Sensor der beschriebenen Art zur Bestimmung des Füllstands in einem Behälter mittels Laufzeitbestimmung von Hochfrequenzsignalen geschieht wie folgt:
Eine nicht dargestellte Signalquelle koppelt eine elektromagnetische Welle in den Hohlleiter 3 ein. Das elektromagnetische Signal wird durch den Hohlleiter 3 in Richtung vorderes Ende 4 geführt und in den Innenraum 30 auf den Subreflektor 17 abgestrahlt. Der Subreflektor 17 reflektiert das Signal so auf den Innenbereich des Hauptreflektors 7, dass dieser das Signal als ein idealerweise parallel gerichtetes Hochfrequenzsignalbündel senkrecht auf die Oberfläche der Flüssigkeit, bzw. auf die Oberfläche des Schüttguts sendet. Das Radom 20 ist aus einem dielektrischen Material und so aufgebaut und angeordnet, dass es die vom Hauptreflektor abgestrahlten elektromagnetischen Signale möglichst wenig behindert. Der von der Oberfläche der Flüssigkeit oder von der Oberfläche des Schüttguts in Richtung auf den Sensor 1 reflektierte Teil des elektromagnetischen Signals, der auf den Innenbereich 10 des Hauptreflektors 7 trifft, wird vom Hauptreflektor auf den Subreflektor 17 reflektiert und von diesem in das vordere Ende 4 des Hohlleiters 3 eingekoppelt. Das reflektierte Signal wird durch eine nicht näher dargestellte Empfangseinheit detektiert, und aus der Laufzeit des Signals die Entfernung zwischen dem Sensor und der Füllgutoberfläche bestimmt. Übliche Verfahren zur Bestimmung der Laufzeit sind zum Beispiel das Impulslaufzeitverfahren (Puls Radar) oder das FMCW Radarverfahren (Frequency Modulated Continous Wave Radar).

Die Erfindung wurde anhand bevorzugter Ausführungsbeispiele erläutert, ohne auf diese Ausführungsbeispiele beschränkt zu sein. Die Merkmale einzelner Ausführungsbeispiele sind frei mit Merkmalen anderer Ausführungsbeispiele kombinierbar oder austauschbar, sofern Kompatibilität vorliegt.

### Bezugszeichenliste

- 1: Sensor
- 3: Hohlleiter
- 4: vorderes Ende des Hohlleiters
- 7: Hauptreflektor
- 10: Innenbereich
- 12: Randbereich
- 17: Subreflektor
- 20: Radom
- 30: Innenraum
- 40: Außenraum
- 43: O-Ring
- 46: O-Ring
- 48: Metallbeschichtung
- 50: zweites Dielektrikum
- 60: Hohlleiterwand
- 65: Streuscheibe

## Patentansprüche

1. Sensor für ein Füllstandmessgerät (1) zur Bestimmung des Füllstands in einem Behälter mittels Laufzeitbestimmung von Hochfrequenzsignalen, aufweisend
einen Hauptreflektor (7), mit einem Randbereich (12) und einem Innenbereich (10),
einen Subreflektor(17), der mit dem Randbereich des Hauptreflektors über ein Radom (20) verbunden ist,
einen Innenraum (30), der von dem Radom (20), und dem Hauptreflektor (7) umschlossen ist,
und einen mit dem Hauptreflektor verbundenen Hohlleiter (3), mit einem vorderen Ende (4), das zur Ein- und/oder Auskopplung elektromagnetischer Wellen auf den Subreflektor (17) gerichtet ist,
**dadurch gekennzeichnet dass** das Radom und der Subreflektor einstückig ausgebildet sind.

2. Sensor nach Anspruch 1,
**dadurch gekennzeichnet dass** der Subreflektor und das Radom aus einem ersten dielektrischen Material geformt sind, wobei der Teil des dielektrischen Materials, der den Subreflektor formt, an seiner dem Innenraum zugewandten Seite eine Metallbeschichtung aufweist.

3. Sensor nach einem der vorhergehenden Ansprüche,
**dadurch gekennzeichnet dass** der Innenraum druck- und vakuumfest gegenüber einem den Sensor umgebenden Außenraum (40) abgedichtet ist.

4. Sensor nach einem der vorhergehenden Ansprüche,
**dadurch gekennzeichnet dass** der Randbereich (12) des Hauptreflektors als ein den Innenbereich (10) umlaufender Kragen, vorzugsweise als ein in Abstrahlrichtung vorstehender, rohrförmig den Innenbereich umgebender Kragen ausgebildet ist.

5. Sensor nach einem der vorhergehenden Ansprüche,
**dadurch gekennzeichnet dass** der Randbereich des Hauptreflektors eine Dichtfläche zur Bereitstellung einer leckdichten Verbindung zwischen dem Radom und dem Hauptreflektor aufweist.

6. Sensor nach Anspruch 6,
**dadurch gekennzeichnet dass** zwischen dem Randbereich des Hauptreflektors und dem Radom wenigstens ein O-Ring zur Abdichtung des Innenraums gegenüber dem den Sensor umgebenden Außenraum (40) vorgesehen ist.

7. Sensor nach einem der vorhergehenden Ansprüche,
**dadurch gekennzeichnet dass** der Hauptreflektor paraboloidförmig ausgebildet ist und entweder aus einem Metall besteht, oder eine Metallbeschichtung auf dem Innenbereich (10) seiner dem Innenraum (30) zugewandten Seite aufweist.

8. Sensor nach einem der vorhergehenden Ansprüche,
**dadurch gekennzeichnet dass** der Subreflektor elliptisch oder hyperbolisch geformt ist.

9. Sensor nach einem der vorhergehenden Ansprüche,
**dadurch gekennzeichnet, dass** der Sensor als Gregory- oder als Cassegrain-Antenne ausgebildet ist.

10. Sensor nach einem der vorhergehenden Ansprüche,
**dadurch gekennzeichnet dass** das Radom aus einem Kunststoff, vorzugsweise aus PP, oder aus PTFE besteht.

11. Sensor nach einem der vorhergehenden Ansprüche,
**dadurch gekennzeichnet dass** das Radom aus einem glasfaserverstärkten Kunststoff, oder aus einem Hochleistungskunststoff, wie beispielsweise aus PEEK oder aus PEI besteht.

12. Sensor nach einem der vorhergehenden Ansprüche,
**dadurch gekennzeichnet dass** das Radom konvex oder kegelförmig ausgebildet ist.

13. Sensor nach einem der vorhergehenden Ansprüche,
**dadurch gekennzeichnet dass** das Radom eine Dicke aufweist, die einem ganzzahligen Vielfachen seiner halben dielektrischen Wellenlänge einer eingekoppelten elektromagnetischen Welle entspricht, wobei die Wellenlänge vorzugsweise einer Wellenlänge des W-Bandes, besonders vorzugsweise einer Wellenlänge zwischen 77 GHz und 81 GHz entspricht.

14. Sensor nach einem der vorhergehenden Ansprüche,
**dadurch gekennzeichnet dass** das vordere Ende des Hohlleiters hornförmig ausgebildet ist und vorzugsweise mit einem zweiten festen dielektrischen Material gefüllt ist.

15. Füllstandmessgerät zur Bestimmung des Füllstands in einem Behälter mittels Laufzeitbestimmung von Hochfrequenzsignalen aufweisend einen Sensor nach einem der vorhergehenden Ansprüche zum Abstrahlen und Empfangen elektromagnetischer Strahlung.
